# FASCICULE DE BREVET EUROPEEN

(11) **EP 3 350 531 B1**
(45) Date de publication et mention de la délivrance du brevet: **04.11.2020**
(21) Numéro de dépôt: 16785188.0
(22) Date de dépôt: 15.09.2016
(51) Int. Cl.: F28F 9/00, B60K 11/00, F01P 3/18, F28F 9/013, F28D 1/04, F28D 21/00

(54) **MODULE D'ÉCHANGE THERMIQUE POUR SYSTÈME DE REFROIDISSEMENT D'UN VÉHICULE**
WÄRMETAUSCHMODUL FÜR EIN FAHRZEUGKÜHLSYSTEM
HEAT-EXCHANGE MODULE FOR A VEHICLE COOLING SYSTEM

(30) Priorité: 18.09.2015 FR 1558817
(43) Date de publication de la demande: 25.07.2018
(73) Titulaire: Renault S.A.S., 92100 Boulogne-Billancourt (FR)
(72) Inventeur: DAVID, Patrick, 78310 Maurepas (FR); PETRUS, Bruno, 77000 Melun (FR); SOLTOIAN, Serghei, 91350 Grigny (FR)
(86) Numéro de dépôt international: PCT/FR2016/052336
(87) Numéro de publication internationale: WO 2017/046532

(56) Documents cités:
- EP-A1- 2 642 235
- DE-A1-102014 201 991
- US-A1- 2015 047 808

## Description

### Domaine technique de l'invention

L'invention se rapporte au domaine des échangeurs de chaleur pour véhicules automobiles.

L'invention concerne plus particulièrement un module d'échange thermique comprenant un radiateur et un élément fonctionnel mutuellement reliés l'un à l'autre par l'intermédiaire d'un moyen de fixation. Un module d'échange de chaleur selon le préambule de la revendication 1 est connu de EP 2 642 235.

L'invention concerne également un véhicule comportant un tel module d'échange thermique.

### Etat de la technique

Classiquement, un véhicule du type d'une automobile comprend une chaîne de traction reliée à un moteur d'entrainement qui peut être de nature électrique ou thermique. Afin d'en assurer un fonctionnement optimal, il convient de recourir à des systèmes de refroidissement dont la fonction est de maintenir une température nominale de fonctionnement d'un liquide de refroidissement circulant notamment dans un circuit de refroidissement du moteur.

Il est connu que plusieurs systèmes de refroidissement sont embarqués dans un véhicule. A titre d'exemple, les systèmes de refroidissement comprennent un échangeur de chaleur disposé dans un circuit de refroidissement du moteur, qui peut être qualifié de circuit haute température puisque le fluide de refroidissement évolue dans des plages de températures comprise approximativement entre 80 et 100°C, un échangeur de chaleur disposé dans un circuit de climatisation et un échangeur de chaleur disposé dans un circuit de refroidissement d'un accessoire, qui peut être qualifié de circuit basse température puisque le fluide de refroidissement évolue dans des plages de températures comprise approximativement entre 40 et 60°C.

Les échangeurs de chaleur sont empilés les uns sur les autres, selon une superposition, afin de former un module d'échange de chaleur. Un tel module d'échange de chaleur est disposé en face avant du véhicule et est destiné à être traversé par un flux d'air afin de refroidir le fluide de refroidissement ou de réfrigération.

Dans une volonté de mutualisation desdits moyens utilisés à la mise en œuvre d'un tel système de refroidissement, certains échangeurs de chaleur d'un module d'échange thermique doivent être utilisables dans différentes conceptions du module d'échange de chaleur. En effet, le besoin en refroidissement mais aussi l'existence même de refroidissement pour un circuit basse température ou un circuit de climatisation ne sont pas identiques dans toutes les catégories ou variantes de conception des véhicules.

A titre d'exemple, certains véhicules comprennent un circuit de refroidissement haute température afin de refroidir le moteur à combustion interne, d'autres comprennent un circuit de refroidissement pour certains équipements embarqués dans le véhicule, comme par exemple peut l'être un EGR, l'acronyme anglais d'un dispositif de recirculation des gaz d'échappement, ou un propulseur additionnel de type moteur électrique, d'autres encore comprennent un circuit de climatisation. Il existe également des véhicules qui, de manière cumulative, comprennent chacun de ces circuits.

En outre, il existe différents faisceaux d'échangeur de chaleur de sorte que selon le besoin de refroidissement, le dimensionnement des échangeurs de chaleur varie d'un échangeur à un autre, de sorte qu'il existe une grande diversité de conception des modules d'échange thermique.

La plupart du temps, le radiateur de refroidissement est commun à plusieurs motorisations, ce qui n'est pas le cas des autres échangeurs de chaleur, tel que le condenseur d'une boucle de climatisation ou le radiateur disposé dans un circuit de refroidissement à basse température.

Il est connu de former un ensemble ou module d'échange de chaleur disposé en partie avant du véhicule, comprenant un échangeur de chaleur à basse température, un condenseur de climatisation et un radiateur de refroidissement du moteur, parfois qualifié d'échangeur de chaleur à haute température, disposés de préférence dans cet ordre par rapport au sens d'écoulement de l'air lors du déplacement du véhicule.

Chaque variante de réalisation d'un module a pour inconvénient de comprendre ses propres moyens de fixations des échangeurs de chaleur entre eux, ce qui est contraire à un besoin de standardisation. En effet, parmi les différents moyens de fixation, il est connu ceux consistant en un assemblage par vissage, lequel nécessite une opération longue pour une fabrication en grande série des véhicules automobiles équipés de tels modules d'échange de chaleur. Les coûts de fabrications s'en trouvent par conséquent augmentés.

### Objet de l'invention

L'invention a pour but de remédier à l'ensemble des inconvénients précités et a pour objet un module d'échange thermique comportant un radiateur et au moins un élément fonctionnel mutuellement reliés l'un à l'autre par l'intermédiaire de moyens de fixation de telle sorte que l'élément fonctionnel s'étend dans un plan parallèle au faisceau du radiateur, lequel définit un plan d'axes Y et Z, un axe X étant perpendiculaire au plan du faisceau du radiateur, le radiateur et l'élément fonctionnel étant destinés à être traversés par un flux d'air.

Plus particulièrement, le module objet de l'invention comporte les caractéristiques de la revendication 1.

Un tel module d'échange de chaleur a pour avantage de permettre une gestion améliorée de la diversité des modules, tout en restant de conception simple et peu couteuse à mettre en œuvre.

Le module d'échange thermique objet de l'invention peut aussi comprendre l'une quelconque des caractéristiques suivantes, prises séparément ou en combinaison entre elles :
- le dispositif d'assemblage comprend des moyens de guidage de l'élément fonctionnel sur le radiateur, de telle sorte que l'élément fonctionnel est apte à se déplacer dans un plan sensiblement parallèle au faisceau du radiateur ;
- lesdits moyens de guidage comprennent des butées d'axes Z et X s'opposant au déplacement de l'élément fonctionnel par rapport au radiateur ;
- l'un d'entre le radiateur et l'élément fonctionnel comprend au moins un doigt de liaison disposé en saillie hors dudit élément fonctionnel et en ce que l'autre d'entre le radiateur et l'élément fonctionnel comprend un pontet formant une ouverture au travers de laquelle ledit doigt de liaison est destiné à s'étendre lorsque l'élément fonctionnel est positionné sur le radiateur ;
- la conformation du doigt de liaison est assujettie à celle du pontet de telle sorte que l'élément fonctionnel puisse coulisser selon l'axe Y sur le radiateur ;
- le dispositif d'indexage et de blocage comprend au moins un moyen d'indexage de l'élément fonctionnel sur le radiateur selon les axes Y et Z ;
- l'un d'entre le radiateur et l'élément fonctionnel comprend au moins un pion d'indexage et en ce que l'autre d'entre le radiateur et l'élément fonctionnel comprend au moins une interface de fixation pourvue d'au moins un orifice dédié à l'indexage d'axe Y ou d'axe Z ;
- le dispositif d'indexage et de blocage comprend un moyen de maintien de l'élément fonctionnel sur le radiateur par rapport à l'axe X ;
- le radiateur comprend des languettes inférieure, intermédiaire et supérieure permettant d'assembler au radiateur un autre radiateur ayant un faisceau de hauteur h1 par l'utilisation des languettes inférieure et intermédiaire ou d'assembler au radiateur un autre radiateur ayant un faisceau de hauteur h2 supérieure à la hauteur h1 par l'utilisation des languettes inférieure et supérieure ;
- le moyen de maintien est réalisé par au moins une languette déformable à l'extrémité de laquelle est agencé un crochet destiné à venir en prise avec un bord de l'interface de fixation lorsque l'élément fonctionnel est positionné sur le radiateur suivant un indexage d'axes Y et Z réalisé au niveau du dispositif d'indexage et de blocage ;
- ledit moyen de maintien est réalisé par plusieurs languettes déformables de telle sorte que le radiateur puisse être assemblé à un élément fonctionnel choisi parmi plusieurs éléments fonctionnels ;
- l'un d'entre le radiateur et l'élément fonctionnel comprend une butée d'appui en X contre laquelle l'autre d'entre le radiateur et l'élément fonctionnel est apte à venir en contact lorsque l'élément fonctionnel est positionné sur le radiateur suivant un indexage d'axes Y et Z réalisé au niveau du dispositif d'indexage et de blocage ;
- il comprend un moyen de mise en contrainte de l'élément fonctionnel contre le radiateur, ledit moyen de mise en contrainte étant formé d'au moins une languette flexible disposée en saillie sur au moins l'un d'entre le radiateur et l'élément fonctionnel ;
- ledit dispositif d'indexage et de blocage est réalisé par moulage des boites collectrices du radiateur et du radiateur secondaire ;

L'invention concerne également un véhicule, notamment du type d'une automobile, comportant un système de refroidissement d'un moteur, caractérisé en ce qu'il comprend un module d'échange thermique ayant l'une quelconque des caractéristiques précédentes.

### Description sommaire des dessins

D'autres avantages et caractéristiques ressortiront plus clairement de la description qui va suivre du mode particulier de réalisation de l'invention, donné à titre d'exemple non limitatif et représenté aux dessins annexés, dans lesquels :
- la figure 1 représente une vue en perspective d'un module d'échange thermique comportant les moyens de fixation, selon l'invention ;
- les figures 2 et 3 représentent, selon une vue en perspective, des agrandissements des zone A et B du module de la figure 1, selon l'invention ;
- la figure 4 représente par une vue en perspective, une variante de réalisation d'un module d'échange thermique, selon l'invention ;
- la figure 5 représente par une vue en perspective, le dispositif d'indexage et de blocage utilisé dans le module d'échange thermique de la figure 4, selon l'invention.

### Description de modes particuliers de réalisation

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront respectivement définies en référence au trièdre X, Y, Z et aux définitions données dans la description. Notamment, la direction longitudinale X correspond au sens de déplacement en marche avant d'un véhicule automobile (non représenté sur les figures), ce qui correspond également au sens d'écoulement de l'air de refroidissement au travers du module d'échange thermique de l'invention.

En référence aux figures, le module 1 d'échange thermique selon l'invention a pour but de proposer une nouvelle méthode de fabrication et d'assemblage d'un radiateur de refroidissement d'un fluide caloporteur avec un élément fonctionnel 3, 4 qui peut être de différentes conceptions, comme cela sera détaillé dans ce qui suit.

Avantageusement, un tel module 1 permet un assemblage facilité du radiateur 2A, 2B avec un élément fonctionnel et comprend à cet effet des moyens de fixation permettant de fixer ledit élément fonctionnel de manière sensiblement parallèle au faisceau du radiateur 2A, 2B.

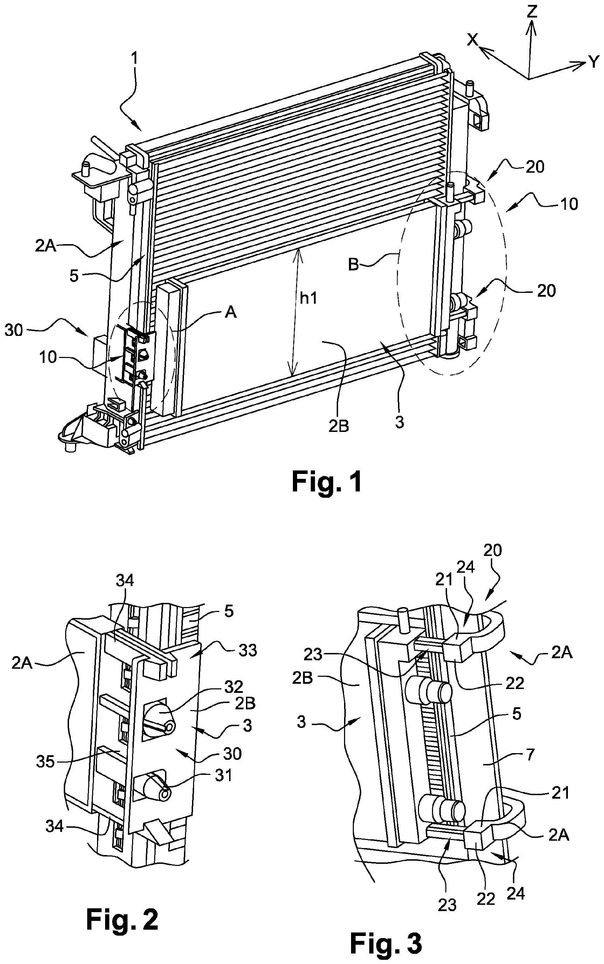

En référence à la figure 1, le module 1 d'échange thermique est constitué d'un empilement d'échangeurs de chaleur refroidit par un écoulement d'air d'orientation X. L'empilement des échangeurs de chaleur par rapport au sens d'écoulement de l'air de refroidissement, est réalisé par un radiateur 2B destiné à être traversé par un fluide caloporteur à basse température, par un condenseur 5 au travers duquel un fluide de réfrigération est destiné à circuler et d'un radiateur 2A de refroidissement d'un fluide caloporteur à haute température, agencés dans cet ordre.

Alors que le faisceau du condenseur 5 recouvre la quasi-totalité du faisceau du radiateur 2A sur lequel il est monté, le radiateur 2B comprend un faisceau de dimension inférieure. Toutefois, selon le besoin en refroidissement, le faisceau du radiateur 2B peut être de taille différente afin de recouvrir différemment le faisceau du radiateur 2A.

Le radiateur 3 peut être traversé par un fluide caloporteur circulant au travers d'un circuit de refroidissement dans lequel peut être disposé un échangeur de refroidissement des gaz d'échappement recyclés ou de tout autre équipement nécessitant un refroidissement, comme par exemple un moteur électrique d'entraînement du véhicule dans le cas d'un véhicule hybride, son dispositif de recharge en énergie électrique et/ou son dispositif de commande.

Le condenseur 5 peut être disposé dans un circuit de climatisation permettant de réguler la température à l'intérieur de l'habitacle du véhicule.

Le radiateur 2A est destiné à être relié à un circuit de refroidissement du moteur à combustion interne.

Selon le véhicule équipé du module 1 d'échange thermique, les besoins en refroidissement varient selon le type de moteur, le volume de l'habitacle à climatiser, et les équipements à refroidir.

Afin de favoriser l'assemblage du radiateur 2A ou 2B avec différents éléments fonctionnels 3 ou 4, les moyens de fixation du module 1 de l'invention comprennent un dispositif d'assemblage 20 du radiateur à l'élément fonctionnel 3, 4 par l'une des extrémités du faisceau du radiateur ainsi qu'un dispositif d'indexage et de blocage 30 situé à l'autre des extrémités du faisceau.

En référence à la figure 3, le dispositif d'assemblage 20 décrit ci-après permet la liaison entre le radiateur 2A à l'intérieur duquel circule un fluide de refroidissement à haute température et un radiateur 3 à l'intérieur duquel circule un fluide de refroidissement à basse température.

A titre d'exemple non limitatif, la température d'un fluide de refroidissement à haute température est comprise entre 80°C et 115°C tandis que la température d'un fluide de refroidissement à basse température est comprise entre 40°C et 60°C.

Le dispositif d'assemblage 20 est en partie formé de doigts 23 s'étendant en saillie hors du radiateur 3. Chaque doigt 23 est parallèle au faisceau du radiateur 3 et réalisé par moulage de la boîte collectrice du radiateur 3. Le doigt 23 est disposé à proximité d'une tubulure d'entrée ou de sortie du fluide caloporteur dans la boite collectrice du radiateur 3.

Afin d'opérer l'assemblage du radiateur 2A avec le radiateur 2B secondaire, le doigt 23 est disposé en butée contre des butées d'axes Z et X qui sont formées dans des pontets 24 appartenant au radiateur 2. Les boites collectrices du radiateur 2A sont d'orientation sensiblement verticale et parallèles entre elles. L'une d'entre ces boîtes collectrices comprend lesdits pontets 24.

Ces derniers peuvent être réalisés par moulage de la boite collectrice du radiateur 2.

De préférence l'une des boîtes collectrices du radiateur comprend deux pontets 24 qui sont parallèles entre eux, l'un étant un pontet supérieur et l'autre un pontet inférieur.

Ici, le pontet 24 supérieur contourne une bouteille 7 de stockage d'un fluide réfrigérant assemblée au collecteur du condenseur 5. A cet effet, le pontet 24 supérieur comprend un bras de section sensiblement en arc de cercle dont la face concave vient au regard de la bouteille 7. L'extrémité libre du pontet 24 comprend un passage s'étendant transversalement au travers du bras. Le passage est ainsi délimité par les butées 21 et 22 d'axes Z et X et est conformé afin de recevoir le doigt 23 supérieur du radiateur 2B.

Le pontet 24 supérieur permet de lier mécaniquement des radiateurs 2A, 2B l'un à l'autre afin de créer un empilement d'échangeurs de chaleur avec un radiateur 2B, 3, un condenseur 5 et un radiateur 2A disposés dans cet ordre selon le sens d'écoulement de l'air de refroidissement selon l'axe X. La bouteille 7 peut ainsi s'étendre verticalement sur toute la hauteur du collecteur du condenseur 5 interposé en X entre deux radiateurs 2A, 3.

De manière avantageuse, une telle architecture du module 1 d'échange thermique permet de disposer le radiateur 3 en face avant de sorte que ce dernier est traversé par l'air de refroidissement. Le radiateur 3 est préférentiellement relié à un circuit de refroidissement dans lequel circule de l'eau dont la température est régulée à environ 40°C.

Selon cette architecture, le radiateur 2A définit la face arrière du module 1, c'est-à-dire qu'il est disposé en amont du module 1 par rapport au flux d'air de refroidissement traversant le module 1 selon l'axe X. L'air de refroidissement traversant alors le radiateur 2A a une température plus élevée du fait de l'échange thermique avec successivement le radiateur 3 de face avant et le condenseur 5. Le radiateur 2A est relié à un circuit de refroidissement à l'intérieur duquel la température de l'eau est approximativement régulée à 90°C.

En l'absence de pontet 24 de contournement du condenseur, soit la bouteille 7 est réduite, soit le condenseur est disposé en face avant du module 1, ce qui permet un empilement des radiateurs 2A, 3 de manière directement adjacente. Une bouteille de volume réduit ne permet pas de garantir un fonctionnement optimal du circuit de climatisation entre deux instants de maintenance du véhicule. L'agencement d'un radiateur en face avant du module 1 créé un réchauffement de l'air de refroidissement, ce qui ne permettrait pas une régulation thermique de l'eau à 40°C, voire à une température inférieure.

Le pontet 24 inférieur s'étend directement sous la bouteille 7 du condenseur 5. Une telle architecture permet une compacité en X de l'empilement des échangeurs formant ledit module 1 de l'invention. Ainsi le radiateur 2B secondaire est disposé au plus près du radiateur 2A.

Le pontet 24 comprend un bras droit d'axe X à l'extrémité duquel est conformé un passage d'axe Y. Le passage est délimité par les butées 21 et 22 d'axes Z et X et est conformé afin de recevoir le doigt 23 inférieur du radiateur 2B.

Lorsque le radiateur 2B secondaire est relié au radiateur 2A par le dispositif d'assemblage 20, les doigts 23 peuvent pivoter à l'intérieur des passages des pontets 24 ce qui rend possible le déplacement angulaire d'axe Z du radiateur 2B secondaire par rapport à l'une des boites collectrices du radiateur 2A. Le radiateur 2B secondaire est également apte à se déplacer dans un plan sensiblement parallèle au faisceau du radiateur 2A.

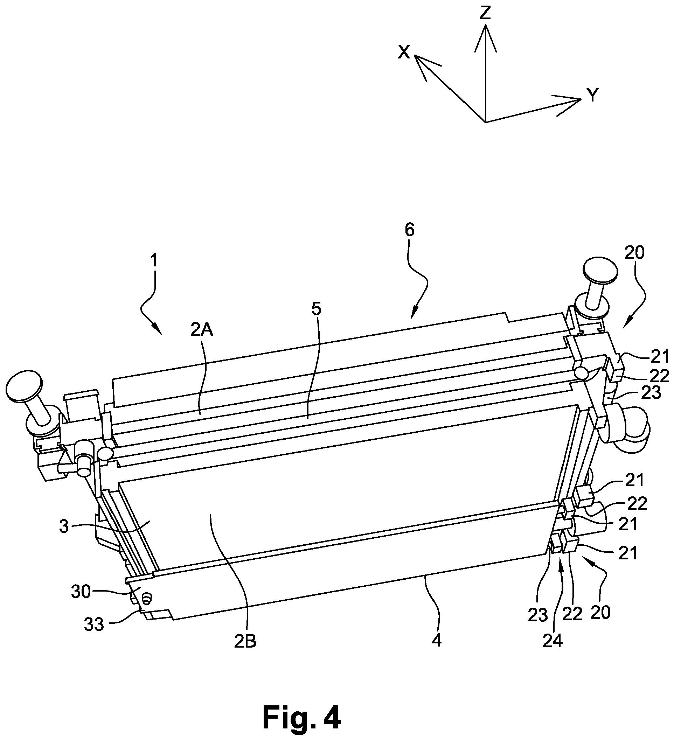

Selon le mode de réalisation de la figure 4, le module 1 comprend un dispositif d'assemblage 20 qui permet la liaison entre le radiateur 2B secondaire et une grille 4 de protection aussi appelée grille anti-gravillonnage. Une telle grille est disposée en amont du module 1 d'échange thermique, selon le sens d'écoulement de l'air, plus particulièrement au regard d'un radiateur 2B secondaire.

Le radiateur 2B secondaire peut être un radiateur mécanique pour lequel l'assemblage des tubes, des ailettes, des plaques collectrices et des couvercles de fermetures s'effectue par sertissage.

De manière alternative, le radiateur 2B secondaire peut être un radiateur brasé pour lequel l'assemblage des tubes, des ailettes, des plaques collectrices et des couvercles de fermetures s'effectue par brasage.

Le dispositif d'assemblage 20 est en partie formé de doigts 23 s'étendant en saillie hors du radiateur 3. Chaque doigt 23 est parallèle à la grille 4 et réalisé par surmoulage de la grille 4.

Afin d'opérer l'assemblage de la grille 4 avec le radiateur 2B secondaire, le doigt 23 est disposé en butée contre des butées d'axes Z et X qui sont formées dans des pontets 24 appartenant au radiateur 2B. Les boites collectrices du radiateur 2B sont d'une orientation sensiblement verticale et parallèles entre elles, et comprennent lesdits pontets 24. Ces derniers peuvent être réalisés par moulage de la boite collectrice du radiateur 2B.

De préférence l'une des boîtes collectrices du radiateur 2B comprend deux pontets 24 qui sont parallèles entre eux.

Chaque pontet 24 s'étend en saillie hors de la boîte collectrice du radiateur 2B selon l'axe X.

L'extrémité libre de chaque pontet 24 en saillie comprend un passage s'étendant transversalement à travers le bras. Le passage d'axe Y est ainsi délimité par les butées 21 et 22 d'axes Z et X et est conformé afin de recevoir le doigt 23 de la grille 4.

Lorsque la grille 4 secondaire est reliée au radiateur 2B secondaire par le dispositif d'assemblage 20, les doigts 23 peuvent pivoter à l'intérieur des passages des pontets 24 ce qui rend possible le déplacement angulaire d'axe Z de la grille 4 par rapport à l'une des boîtes collectrices du radiateur 2B secondaire. La grille 4 est également apte à se déplacer dans un plan sensiblement parallèle au faisceau du radiateur 2B secondaire.

Par la boîte collectrice opposée du radiateur 2A ou du radiateur 2B secondaire, le module 1 d'échange thermique comprend un dispositif 30 d'indexage et de blocage qui va à présent être détaillé.

Le dispositif 30 d'indexage et de blocage est visible sur la partie gauche du module 1 d'échange thermique, au niveau de la zone cerclée en pointillée sur la figure 1 qui est représentée de manière agrandie sur la figure 2.

L'indexage permet de pré-positionner le radiateur 2B secondaire par rapport au radiateur 2A selon les axes Y et Z. A cet effet, le radiateur 2B secondaire comprend une interface 33 de fixation qui est réalisée sous la forme d'une plaque s'étendant en saillie hors de la boîte collectrice, de manière sensiblement parallèle au faisceau du radiateur 2B.

L'interface 33 de fixation peut être réalisée par moulage de la boîte collectrice en matière plastique.

L'interface 33 de fixation comprend des ouvertures au travers desquelles des doigts d'indexage peuvent s'étendre.

Un pion 31 d'indexage permet de positionner en Z le radiateur 2B secondaire relativement au radiateur 2A.

Un pion 32 d'indexage permet de positionner en Y le radiateur 2B secondaire relativement au radiateur 2A.

Chaque pion 31 ou 32 d'indexage est réalisé par moulage du couvercle de la boîte collectrice du radiateur 2A, de telle manière qu'il s'étend perpendiculairement au faisceau.

Afin de faciliter l'insertion des pions 31 et 32 d'indexage du radiateur 2A dans les ouvertures de l'interface 33 du radiateur 2B secondaire, chaque extrémité libre des pions 31 et 32 est conique.

Comme cela est rendu visible sur la figure 2, le dispositif 30 d'indexage et de blocage comprend en outre un moyen de maintien du radiateur 2B secondaire sur le radiateur 2A, par rapport à l'axe X.

Ledit moyen de maintien est formé en partie par une butée 35 d'appui en X contre laquelle la face intérieure de l'interface 33 est disposée en appui.

Ledit moyen de maintien est également formé par des languettes 34 déformables à l'extrémité de chacune desquelles est agencé un crochet destiné à venir en prise avec un bord de l'interface 33 de fixation. Une languette 34 inférieure est rapportée sous l'interface 33 de fixation de telle sorte que son crochet vient en prise avec un bord inférieur de ladite interface. Une languette 34 supérieure vient en prise avec un bord vertical formé dans une échancrure réalisée en partie supérieure de l'interface 33 de fixation.

De manière avantageuse, chaque pion 31 et 32 d'indexage est un tube à l'intérieur duquel peut être disposé une vis de telle sorte qu'en cas de rupture d'une languette 34 déformables, la fixation du radiateur 2B secondaire sur le radiateur 2A s'effectue par vissage.

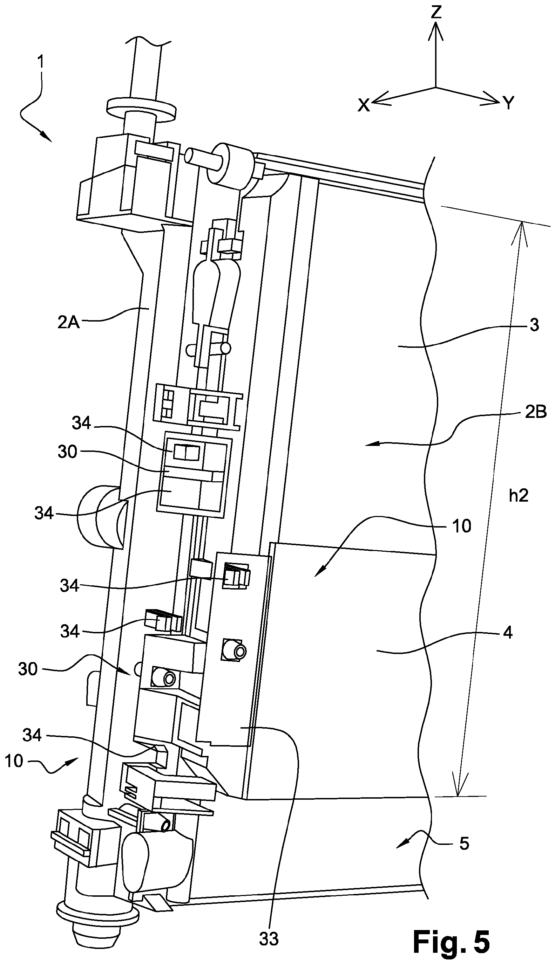

Comme cela est rendu visible sur la figure 5, le radiateur 2A peut comprendre plusieurs moyens de maintien en X afin de répondre favorablement au besoin de diversité des échangeurs. A titre d'exemple, le radiateur 2A comprend des languettes 34 inférieure, intermédiaire et supérieure. Cela permet d'assembler au radiateur 2A un radiateur 2B ayant un faisceau de hauteur h1 par l'utilisation des languettes 34 inférieure et intermédiaire comme cela est représenté sur la figure 1. Selon une autre configuration du module 1 d'échange thermique, cela permet d'assembler au radiateur 2A un radiateur 2B ayant un faisceau de hauteur h2 supérieure à la hauteur h1 par l'utilisation des languettes 34 inférieure et supérieure comme cela est représenté sur la figure 5. Un tel radiateur 2A permet de gérer la diversité de conception des modules 1 d'échange thermique.

Sur la figure 4, le dispositif 30 d'indexage et de blocage de la grille 4 au radiateur 2B secondaire reprend le même principe de fixation que décrit précédemment.

Une interface 33 de fixation s'étend transversalement dans le plan de la grille et comprend une ouverture dans laquelle est disposé un pion d'indexage assurant son positionnement en Y et Z par rapport au radiateur 2B secondaire.

Lesdits moyens de maintien en X sont formés par des languettes déformables et munies de crochets. Ici une languette inférieure coopère avec le bord latéral inférieur de l'interface de fixation tandis qu'une languette supérieure coopère avec une ouverture dont le bord est en prise avec son crochet.

Chaque languette permet une retenue en -X selon un principe de fixation rapide du type par clippage.

Une butée en X permet un appui de l'interface de fixation de la grille.

La butée, les languettes ainsi que les pions sont venus de moulage d'une matière plastique de la boite collectrice du radiateur 2B secondaire.

Du fait des tolérances de fabrications desdits moyens de maintien en X, le module 1 d'échange thermique comprend un moyen de mise en contrainte du radiateur 2B secondaire contre le radiateur 2A ou de la grille 4 contre le radiateur 2B secondaire, voire cumulativement les deux.

Ledit moyen de mise en contrainte est formé d'au moins une languette flexible disposée respectivement en saillie sur au moins l'un d'entre le radiateur 2A et le radiateur 2B, et l'un d'autre le radiateur 2B et la grille 4.

Avec le moyen 10 de fixation tel qu'il a été précédemment décrit, le radiateur 2B secondaire ainsi que la grille 4 de protection peuvent être facilement assemblés respectivement au radiateur 2A et au radiateur 2B secondaire, de telle sorte que le temps de fabrication d'un module 1 d'échange thermique selon l'invention est réduit tout en garantissant une qualité d'assemblage.

Après avoir utilisé le dispositif d'assemblage présent au niveau d'une boîte collectrice du radiateur 2A ou du radiateur 2B secondaire, le mouvement de rotation selon l'axe Z du radiateur 2B vers le radiateur 2A permet d'engager les pions 31 et 32 d'indexage dans les ouvertures dédiées pratiquées dans l'interface 33 de fixation jusqu'au clippage de cette dernière. Ce même mode opératoire peut être suivi pour la fixation de la grille 4 sur le radiateur 2B secondaire.

Avantageusement, le module 1 d'échange thermique réalisé avec un tel moyen 10 de fixation permet de concevoir des modules variant selon le faisceau du radiateur 2B (hauteur h1 ou hauteur h2), selon la présence de la grille 4.

Le module 1 d'échange thermique peut équiper des véhicules de conceptions différentes quant à leur moteur thermique d'entraînement ou de leur équipement à refroidir.

Pour cette raison, l'invention a aussi trait à un véhicule équipé d'un tel élément structurel.

## Revendications

1. Module (1) d'échange thermique comprenant un radiateur (2A) et au moins un élément fonctionnel (3, 4) mutuellement reliés l'un à l'autre par l'intermédiaire de moyens (10) de fixation de telle sorte que l'élément fonctionnel s'étend dans un plan parallèle au faisceau du radiateur, lequel définit un plan d'axes Y et Z, un axe X étant perpendiculaire au plan du faisceau du radiateur (2A), le radiateur (2A) et l'élément fonctionnel (3, 4) sont destinés à être traversés par un flux d'air, lesdits moyens (10) de fixation comprenant respectivement un dispositif d'assemblage (20) du radiateur à l'élément fonctionnel (3, 4) par l'une des extrémités du faisceau du radiateur ainsi qu'un dispositif d'indexage et de blocage (30) situé à l'autre des extrémités du faisceau, **caractérisé en ce que** le radiateur (2A) comprend un pontet (24) supérieur contournant une bouteille (7) de stockage d'un fluide réfrigérant assemblée à un collecteur d'un condenseur (5), l'élément fonctionnel (3) étant un radiateur (2B) secondaire, le dispositif d'assemblage (20) de l'élément fonctionnel (3, 4) au radiateur (2A) étant pour partie réalisé par le pontet (24) supérieur permettant de lier mécaniquement les radiateurs (2A, 2B) l'un à l'autre afin de créer un empilement d'échangeur de chaleur avec un radiateur (2B), un condenseur (5) et un radiateur (2A) disposés dans cet ordre selon l'axe X, le pontet (24) supérieur comprend un bras de section sensiblement en arc de cercle dont la face concave vient au regard de la bouteille (7), une extrémité libre du pontet (24) comprenant un passage s'étendant transversalement au travers du bras, le passage étant délimité par des butées (21, 22) d'axes Z et X et est conformé afin de recevoir un doigt (23) supérieur s'étendant en saillie hors du radiateur (2B).

2. Module (1) d'échange thermique selon la revendication 1, **caractérisé en ce que** le dispositif d'indexage et de blocage (30) comprend au moins un moyen d'indexage de l'élément fonctionnel (3, 4) sur le radiateur (2A, 2B) selon les axes Y et Z, l'un d'entre le radiateur (2A, 2B) et l'élément fonctionnel (3, 4) comprend au moins un pion (31, 32) d'indexage, l'autre d'entre le radiateur (2A, 2B) et l'élément fonctionnel (3, 4) comprend au moins une interface (33) de fixation pourvue d'au moins un orifice dédié à l'indexage d'axe Y ou d'axe Z, le dispositif d'indexage et de blocage (30) comprend un moyen de maintien de l'élément fonctionnel sur le radiateur (2A, 2B) par rapport à l'axe X.

3. Module (1) d'échange thermique selon la revendication 2, **caractérisé en ce que** le moyen de maintien est réalisé par au moins une languette (34) déformable à l'extrémité de laquelle est agencé un crochet destiné à venir en prise avec un bord de l'interface (33) de fixation lorsque l'élément fonctionnel (3, 4) est positionné sur le radiateur (2A, 2B) suivant un indexage d'axes Y et Z réalisé au niveau du dispositif (30) d'indexage et de blocage.

4. Module (1) d'échange thermique selon la revendication 3, **caractérisé en ce que** ledit moyen de maintien est réalisé par plusieurs languettes (34) déformables de telle sorte que le radiateur (2A, 2B) puisse être assemblé à un élément fonctionnel choisi parmi plusieurs éléments fonctionnels (3, 4).

5. Module (1) d'échange thermique selon la revendication 4, **caractérisé en ce que** le radiateur (2A) comprend des languettes (34) inférieure, intermédiaire et supérieure permettant d'assembler au radiateur (2A) un autre radiateur (2B) ayant un faisceau de hauteur h1 par l'utilisation des languettes (34) inférieure et intermédiaire ou d'assembler au radiateur (2A) un autre radiateur (2B) ayant un faisceau de hauteur h2 supérieure à la hauteur h1 par l'utilisation des languettes (34) inférieure et supérieure.

6. Module (1) d'échange thermique selon l'une quelconque des revendications 1 à 5, **caractérisé en ce que** l'un d'entre le radiateur (2A, 2B) et l'élément fonctionnel (3, 4) comprend une butée (35) d'appui en X contre laquelle l'autre d'entre le radiateur (2A, 2B) et l'élément fonctionnel (3, 4) est apte à venir en contact lorsque l'élément fonctionnel est positionné sur le radiateur suivant un indexage d'axes Y et Z réalisé au niveau du dispositif (30) d'indexage et de blocage.

7. Module (1) d'échange thermique selon l'une quelconque des revendications 1 à 6, **caractérisé en ce qu'**il comprend un moyen de mise en contrainte de l'élément fonctionnel (3, 4) contre le radiateur, ledit moyen de mise en contrainte étant formé d'au moins une languette flexible disposée en saillie sur au moins l'un d'entre le radiateur (2A, 2B) et l'élément fonctionnel (3, 4).

8. Véhicule, notamment du type d'une automobile, comportant un système de refroidissement d'un moteur, **caractérisé en ce qu'**il comprend un module (1) d'échange thermique conforme à l'une quelconque des revendications précédentes.

## Patentansprüche

1. Wärmetauschmodul (1), welches einen Radiator (2A) und wenigstens ein funktionales Element (3, 4) umfasst, die über Befestigungsmittel (10) derart miteinander verbunden sind, dass sich das funktionale Element in einer Ebene erstreckt, die parallel zum Rohrbündel des Radiators ist, welches eine Ebene mit den Achsen Y und Z definiert, wobei eine Achse X senkrecht zur Ebene des Rohrbündels des Radiators (2A) ist, wobei der Radiator (2A) und das funktionale Element (3, 4) dazu bestimmt sind, von einem Luftstrom durchquert zu werden, wobei die Befestigungsmittel (10) eine Vorrichtung zum Zusammenbau (20) des Radiators mit dem funktionalen Element (3, 4) an einem der Enden des Rohrbündels des Radiators bzw. eine am anderen der Enden des Rohrbündels befindliche Indexierungs- und Arretiervorrichtung (30) umfassen, **dadurch gekennzeichnet, dass** der Radiator (2A) einen oberen Bügel (24) umfasst, der sich um eine Flasche (7) zur Speicherung eines Kältemittels herum erstreckt, die mit einem Sammler eines Kondensators (5) zusammengebaut ist, wobei das funktionale Element (3) ein sekundärer Radiator (2B) ist, wobei die Vorrichtung zum Zusammenbau (20) des funktionalen Elements (3, 4) mit dem Radiator (2A) zum Teil durch den oberen Bügel (24) realisiert wird, der es ermöglicht, die Radiatoren (2A, 2B) mechanisch miteinander zu verbinden, um einen Wärmetauscherstapel mit einem Radiator (2B), einem Kondensator (5) und einem Radiator (2A) zu erzeugen, die in dieser Reihenfolge entlang der Achse X angeordnet sind, wobei der obere Bügel (24) einen Arm mit im Wesentlichen kreisbogenförmigem Querschnitt umfasst, dessen konkave Seite der Flasche (7) zugewandt ist, wobei ein freies Ende des Bügels (24) einen Durchgang umfasst, der sich quer durch den Arm hindurch erstreckt, wobei der Durchgang von Anschlägen (21, 22) mit den Achsen Z und X begrenzt wird und dafür ausgebildet ist, einen oberen Finger (23) aufzunehmen, der sich aus dem Radiator (2B) herausragend erstreckt.

2. Wärmetauschmodul (1) nach Anspruch 1, **dadurch gekennzeichnet, dass** die Indexierungs- und Arretiervorrichtung (30) wenigstens ein Mittel zur Indexierung des funktionalen Elements (3, 4) am Radiator (2A, 2B) entlang der Achsen Y und Z umfasst, wobei eines von dem Radiator (2A, 2B) und dem funktionalen Element (3, 4) wenigstens einen Indexierungsstift (31, 32) umfasst, das andere von dem Radiator (2A, 2B) und dem funktionalen Element (3, 4) wenigstens eine Befestigungsschnittstelle (33) umfasst, die mit wenigstens einer Öffnung versehen ist, die für die Indexierung entlang Achse Y oder Achse Z bestimmt ist, und die Indexierungs- und Arretiervorrichtung (30) ein Mittel zum Halten des funktionalen Elements am Radiator (2A, 2B) in Bezug auf die Achse X umfasst.

3. Wärmetauschmodul (1) nach Anspruch 2, **dadurch gekennzeichnet, dass** das Haltemittel durch wenigstens eine verformbare Zunge (34) realisiert ist, an deren Ende ein Haken angeordnet ist, der dazu bestimmt ist, mit einem Rand der Befestigungsschnittstelle (33) in Eingriff zu gelangen, wenn das funktionale Element (3, 4) am Radiator (2A, 2B) gemäß einer Indexierung entlang der Achsen Y und Z positioniert wird, die an der Indexierungs- und Arretiervorrichtung (30) durchgeführt wird.

4. Wärmetauschmodul (1) nach Anspruch 3, **dadurch gekennzeichnet, dass** das Haltemittel durch mehrere verformbare Zungen (34) realisiert ist, derart, dass der Radiator (2A, 2B) mit einem funktionalen Element zusammengebaut werden kann, das aus mehreren funktionalen Elementen (3, 4) ausgewählt ist.

5. Wärmetauschmodul (1) nach Anspruch 4, **dadurch gekennzeichnet, dass** der Radiator (2A) eine untere, eine dazwischenliegende und eine obere Zunge (34) umfasst, die es ermöglichen, mit dem Radiator (2A) einen anderen Radiator (2B), der ein Rohrbündel mit der Höhe h1 aufweist, durch Verwendung der unteren und der dazwischenliegenden Zunge (34) zusammenzubauen, oder mit dem Radiator (2A) einen anderen Radiator (2B), der ein Rohrbündel mit der Höhe h2 aufweist, die höher ist als die Höhe h1, durch Verwendung der unteren und der oberen Zunge (34) zusammenzubauen.

6. Wärmetauschmodul (1) nach einem der Ansprüche 1 bis 5, **dadurch gekennzeichnet, dass** eines von dem Radiator (2A, 2B) und dem funktionalen Element (3, 4) ein Widerlager (35) in X-Richtung umfasst, mit dem das andere von dem Radiator (2A, 2B) und dem funktionalen Element (3, 4) in Kontakt kommen kann, wenn das funktionale Element am Radiator gemäß einer Indexierung entlang der Achsen Y und Z positioniert wird, die an der Indexierungs- und Arretiervorrichtung (30) durchgeführt wird.

7. Wärmetauschmodul (1) nach einem der Ansprüche 1 bis 6, **dadurch gekennzeichnet, dass** es ein Mittel zum Verspannen des funktionalen Elements (3, 4) gegen den Radiator umfasst, wobei das Mittel zum Verspannen von wenigstens einer flexiblen Zunge gebildet wird, die an wenigstens einem von dem Radiator (2A, 2B) und dem funktionalen Element (3, 4) vorstehend angeordnet ist.

8. Fahrzeug, insbesondere vom Typ eines Automobils, welches ein Kühlsystem eines Motors aufweist, **dadurch gekennzeichnet, dass** es ein Wärmetauschmodul (1) gemäß einem der vorhergehenden Ansprüche umfasst.

## Claims

1. Heat-exchange module (1) comprising a radiator (2A) and at least one functional element (3, 4) these being connected to one another via fixing means (10) in such a way that the functional element extends in a plane parallel to the core bundle of the radiator, which defines a plane with axes Y and Z, an axis X being perpendicular to the plane of the core bundle of the radiator (2A), the radiator (2A) and the functional element (3, 4) are intended to have a flow of air passed through them, the said fixing means (10) respectively comprising an assembly device (20) for assembling the radiator with the functional element (3, 4) via one of the ends of the core bundle of the radiator, and an indexing and immobilizing device (30) which is situated at the other of the ends of the core bundle, **characterized in that** the radiator (2A) comprises an upper bridge (24) passing around a bottle (7) that stores refrigerant fluid and is assembled to a manifold of a condenser (5), the functional element (3) being a secondary radiator (2B), the assembly device (20) assembling the functional element (3, 4) to the radiator (2A) being produced in part by the upper bridge (24) allowing the radiators (2A, 2B) to be mechanically connected to one another in order to create a heat-exchanger stack with a radiator (2B), a condenser (5) and a radiator (2A) arranged **in that** order along the axis X, the upper bridge (24) comprising an arm of substantially circular-arc shaped cross section the concave face of which faces the bottle (7), a free end of the bridge (24) comprising a passage extending transversely through the arm, the passage being delimited by end stops (21, 22) of axes Z and X and configured in such a way as to accept an upper finger (23) projecting out from the radiator (2B).

2. Heat exchange module (1) according to Claim 1, **characterized in that** the indexing and immobilizing device (30) comprises at least one means of indexing the functional element (3, 4) on the radiator (2A, 2B) along the axes Y and Z, of the radiator (2A, 2B) and the functional element (3, 4) one comprising at least one indexing pin (31, 32) and the other comprising at least one fixing interface (33) provided with at least one orifice dedicated to Y-axis or Z-axis indexing, the indexing and immobilizing device (30) comprising a means for holding the functional element on the radiator (2A, 2B) with respect to the axis X.

3. Heat exchange module (1) according to Claim 2, **characterized in that** the holding means is produced in the form of at least one deformable tab (34) at the end of which there is a hook intended to engage with an edge of the fixing interface (33) when the functional element (3, 4) is positioned on the radiator (2A, 2B) according to Y-axis and Z-axis indexing achieved at the indexing and immobilizing device (30).

4. Heat exchange module (1) according to Claim 3, **characterized in that** said holding means is produced in the form of several deformable tabs (34) such that the radiator (2A, 2B) can be assembled with a functional element selected from among several functional elements (3, 4).

5. Heat exchange module (1) according to Claim 4, **characterized in that** the radiator (2A) comprises lower, intermediate and upper tabs (34) allowing another radiator (2B) that has a core bundle of height h1 to be assembled with the radiator (2A) through use of the lower or intermediate tabs (34) or allowing another radiator (2B) having a core bundle of height h2 greater than the height h1 to be assembled with the radiator (2A) through use of the lower and upper tabs (34).

6. Heat exchange module (1) according to any one of Claims 1 to 5, **characterized in that** of the radiator (2A, 2B) and the functional element (3, 4) one of them comprising an end stop (35) bearing in the X direction and against which the other one of the radiator (2A, 2B) and the functional element (3, 4) is able to come into contact when the functional element is positioned on the radiator with Y and Z axis indexing achieved at the indexing and immobilizing device (30).

7. Heat exchange module (1) according to any one of Claims 1 to 6, **characterized in that** it comprises a means of stressing the functional element (3, 4) against the radiator, this stressing means being formed of at least one flexible tab projecting from at least one of the radiator (2A, 2B) and the functional element (3, 4).

8. Vehicle, notably of the motor vehicle type, comprising an engine cooling system, **characterized in that** it comprises a heat exchange module (1) according to any one of the preceding claims.
